# EUROPEAN PATENT APPLICATION

(11) **EP 4 674 253 A1**
(43) Date of publication of application: **07.01.2026**
(21) Application number: 25186865.9
(22) Date of filing: 02.07.2025
(51) Int. Cl.: A01D 78/00, A01D 78/04, A01B 73/04

(54) **MODULAR SIDE DELIVERY RAKE**

(30) Priority: 04.07.2024 IT 202400015463
(71) Applicant: Repossi Macchine Agricole S.r.l., 27022 Casorate Primo (PV) (IT)
(72) Inventor: REPOSSI, Gabriele, 27022 CASORATE PRIMO (PV) (IT)
(74) Representative: Studio Torta S.p.A.

(57) **Abstract**

A side delivery rake includes a main frame (2), a first raking unit (4) and a second raking unit (5) angularly movable between respective working positions, in which the first raking unit (4) and the second raking unit (5) are lowered, and respective transport positions, in which the first raking unit (4) and the second raking unit (5) are raised. A coupling system (20) is arranged on a rear side (2b) of the main frame (2) and is configured for connection to a three-point hitch. A towing connector (18) is arranged on the front side (2a) of the main frame (2). The rake further includes an auxiliary frame (7), removably connectable to the coupling system (20) and equipped with supporting wheels (28), and a tow bar (8), removably connectable to the towing connector (18).

## Description

### Cross-reference to related applications

This patent application claims priority from Italian patent application no. 102024000015463 filed on July 4, 2024, the entire disclosure of which is incorporated herein by reference.

### Technical field

The invention relates to a modular side delivery rake.

### Background

As it is known, rakes are used in agriculture to collect mown forage into windrows.

The most commonly used rakes are of the rotary type or of the comb type.

Rotary rakes employ a plurality of rakes mounted on one or more wheels arranged, in use, substantially horizontally.

Comb rakes are provided with one or more raking units, each comprising combs that are substantially movable in vertical planes and are operated by pairs of rotating discs, to which the ends of the combs are connected.

Rakes can be towed by an agricultural vehicle, for example a tractor, or carried at the front of the agricultural vehicle by a front three-point hitch. In general, it may be advantageous to use one or the other type of rake based on the operation to be performed, for example to prevent the agricultural vehicle from directly driving on the forage so as to avoid the damage that could be caused, especially to delicate crops. In particular, for raking operations it is convenient to use a front rake, which moves the forage and forms the windrows before the agricultural vehicle drives by. Vice versa, for the baling or rolling of the forage and the displacement of the windrows, the rake is preferably towed by the agricultural vehicle.

Known rakes, however, are not usually interchangeable and, therefore, it is not possible to use the most suitable configuration each time.

EP 2 384 615 A1 discloses a side delivery rake comprising a main frame, a first raking unit, a second raking unit and a coupling system. The main frame has a front side and a rear side. The first raking unit and a second raking unit, of the comb type, are carried by the main frame and are angularly movable between respective working positions, in which the first raking unit and the second raking unit are lowered, and respective transport positions, in which the first raking unit and the second raking unit are raised. The coupling system is arranged on the rear side of the main frame and is configured to be connected to a three-point hitch.

### Summary

Therefore, the object of the invention is to provide a side delivery rake, which overcomes or at least attenuates the limitations described above.

According to the invention, there is provided a side delivery rake as defined in claim 1.

### Brief description of the figures

The invention will be best understood upon perusal of the following detailed description of preferred embodiments thereof, by mere way of non-limiting example, with reference to the accompanying drawings, in which:
- figure 1 is a perspective front view of a side delivery rake according to an embodiment of the invention;
- figure 2 is a schematic view of the rake of figure 1 in a first operating configuration;
- figure 3 is a schematic view of the rake of figure 1 in a second operating configuration, in use;
- figure 4 is a schematic view of the rake of figure 1 in the second operating configuration, during transport;
- figure 5 is a perspective view of the rake of figure 1, with parts removed for greater clarity;
- figure 6 shows the view of figure 1 in an exploded representation;
- figure 7 is an enlarged perspective rear view of a component of the rake of figure 1; and
- figure 8 is a perspective front view of the component of figure 7.

### Description of embodiments

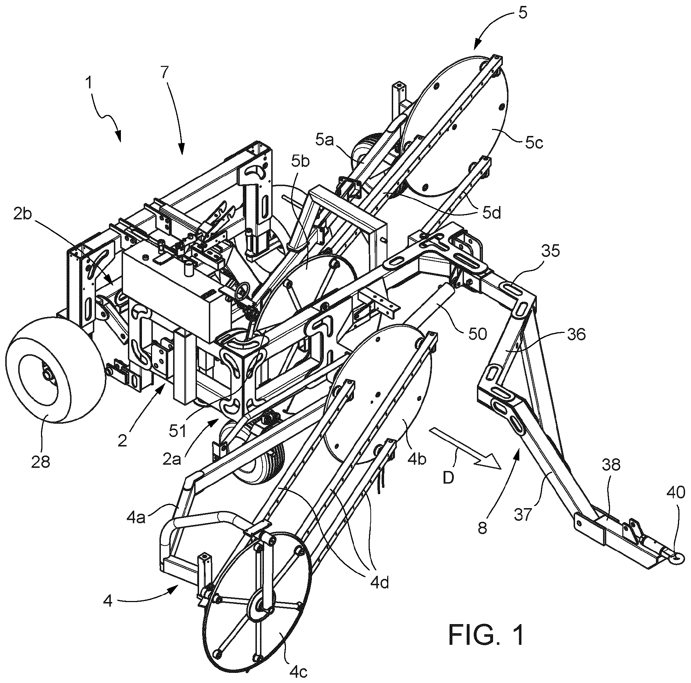

With reference to figure 1, a side delivery rake according to an embodiment of the invention is indicated, as a whole, with number 1 and comprises a main frame 2, a first raking unit 4 and a second raking unit 5, an auxiliary frame 7 and a tow bar 8.

The first raking unit 4 and the second raking unit 5, of the comb type, are hinged to the main frame 2 and are angularly movable between respective working positions and respective transport positions. In the working positions, the first raking unit 4 and the second raking unit 5 are lowered, whereas in the transport positions, the first raking unit 4 and the second raking unit 5 are raised.

The first raking unit 4 comprises a support bar 4a hinged to the main frame 2, an inner disc 4b, an outer disc 4c and a plurality of combs 4d (normally, three to six). Similarly, the second raking unit 5 comprises a support bar 5a hinged to the main frame 2, an inner disc 5b, an outer disc 5c and a plurality of combs 5d.

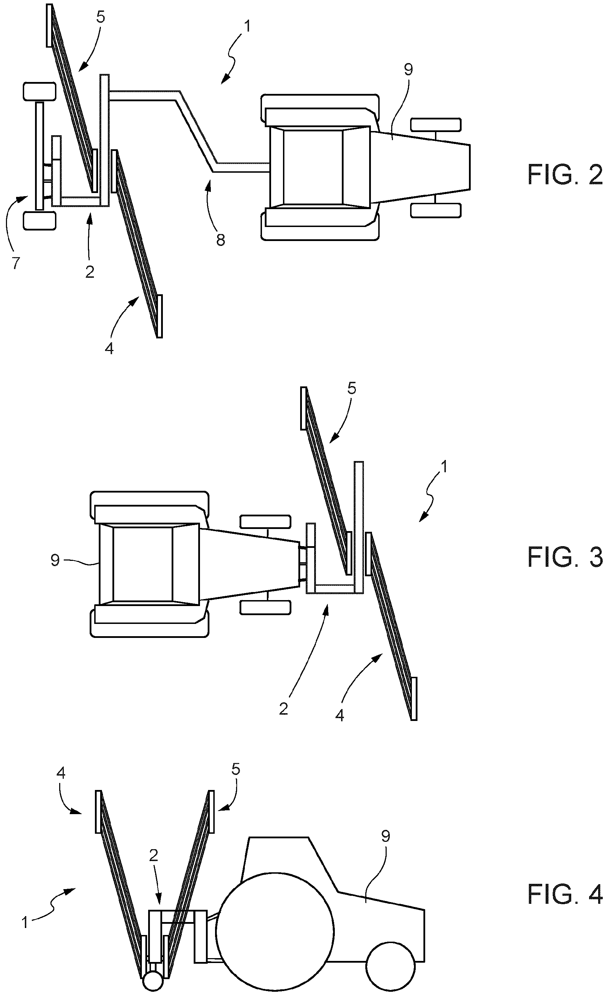

The auxiliary frame 7 and the tow bar 8 can be connected to the main frame 2 in a removable manner to allow the rake 1 to be used in different configurations. In particular, as explained in detail below, in a first configuration (figure 2), the auxiliary frame 7 and the tow bar 8 are connected to the main frame 2. The rake 1 is connected to the agricultural vehicle 9 at the back thereof and is towed by the tow bar 8 both for use and for road transport. In a second configuration (figure 3), the main frame 2 is separate from the auxiliary frame 7 and from the tow bar 8 and is connected to an agricultural vehicle 9 by a front three-point hitch and carried at the front of the agricultural vehicle 9. Furthermore, in the first configuration, the rake 1 can also be connected to a rear three-point hitch of the agricultural vehicle 9 for road transport (figure 4).

The main frame 2 is supported by at least one swivel wheel 14 and comprises a front structure 10 and a rear structure 11, defining a front side 2a and a rear side 2b of the main frame 2, respectively, and a bridge 12 connecting the front structure 10 and the rear structure 11. Hereinafter, the terms "front" and "rear" are to be understood with reference to the rake 1 in working configuration and to a travel direction D. For example, in the first configuration, the rake 1 is carried at the front with the rear side 2b of the main frame 2 connected to the front three-point hitch of the agricultural vehicle 9. In the second configuration, the rake 1 is towed behind the agricultural vehicle 9 by the tow bar 8, which is connected to the front side 2a of the main frame 2**.** When the rake 1 is connected to the rear three-point hitch of the agricultural vehicle 9 for road transport, the front side 2a and the rear side 2b actually face backward and forward, respectively, but the rake 1 in this case is not in the working configuration.

The front structure 10 and the rear structure 11 extend from the bridge 12 mainly transversely to the travel direction D. For example, the front structure 10 and the rear structure 11 comprise respective tubular components, whose main dimension lies in a plane perpendicular to the travel direction D**.**

The front structure 10 comprises an upper tubular component 13, defined by one or more elements, and a lower tubular component 15 and carries the first raking unit 4 and the second raking unit 5. In an embodiment, in particular, the upper tubular component 13 and the lower tubular component 15 are transverse to the travel direction D and are parallel to one another. The lower tubular component 15 is provided with an anchorage 16 for housing a pin 17, to which the first raking unit 4 and the second raking unit 5 are hinged. The pin 17 defines a common hinge axis C, parallel to the travel direction D, for the first raking unit 4 and the second raking unit 5**.** This is not to be understood, however, in a limiting sense, since the raking units could have distinct hinge axes. The first raking unit 4 is located on the front side 2a of the main frame, whereas the second raking unit 5 is located, with respect to the travel direction D, between the front structure 10 and the rear structure 11.

The upper tubular component 13 extends beyond the lower tubular component 15 and carries a towing connector 18 at an end opposite to the bridge 12, on the front side 2a of the main frame 2. In an embodiment, the towing connector 18 comprises a seat 18a defined by a tubular component parallel to the travel direction D and having a section sufficient to permit the through insertion of a connection end 8a of the tow bar 8. Hence, the towing connector 18 is attached to the front structure 11 of the main frame 2 in a position that is offset, transversely to the travel direction D, with respect to the hinge axis C of the raking units 4, 5, in particular of the first raking unit 4, and allows the tow bar 8 to be coupled to the main frame 2 in a removable manner.

When, in the first configuration, the tow bar 8 is coupled to the connector 18, the connection end 8a protrudes through the seat 18a past the upper tubular component 13 and can be reversibly locked by a locking device 19, for example a bolt, through a seat in the connection end 8a protruding from the upper tubular component 13. The tow bar 8 may therefore be connected to the towing connector 18 in a removable manner.

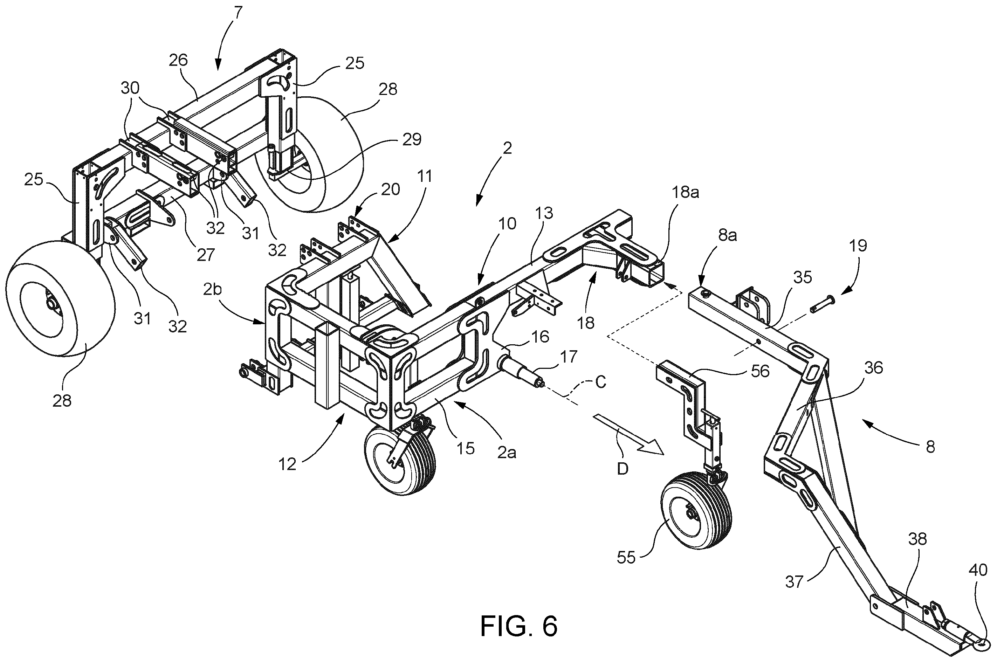

In the second configuration, the towing connector 18 may be used to couple an auxiliary wheel 55 instead of the tow bar 8 (figure 6). To this purpose, the auxiliary wheel 55 is provided with a support 56 having an end that may be inserted into the seat 18a of the towing connector 8.

A front actuator 50 is coupled between the towing connector 18 and the first raking unit 4 and is configured to move the first raking unit 4 between the working configuration and the transport position.

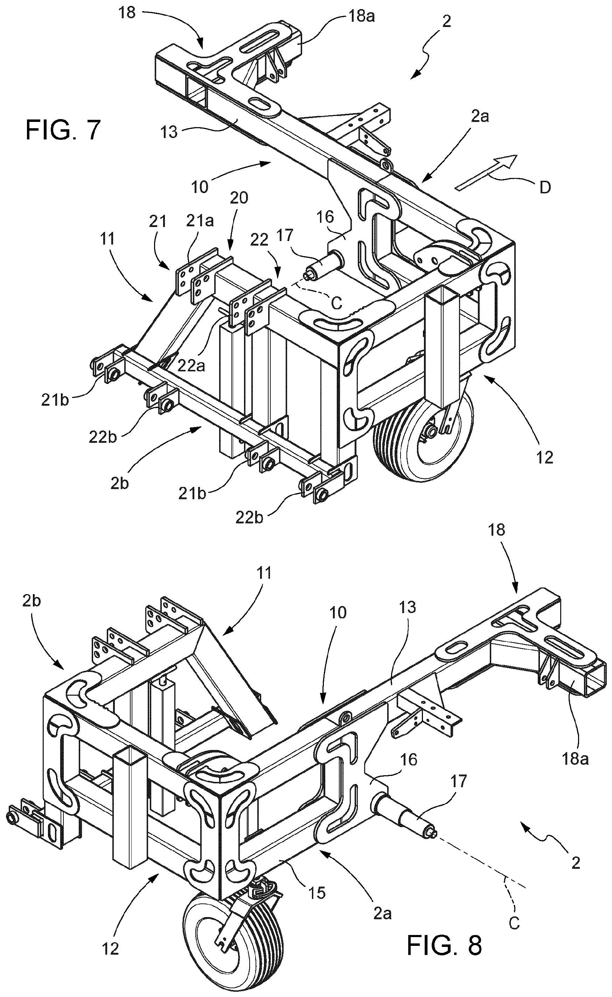

The rear structure 11 is provided with a coupling system 20 (better visible in figure 7) arranged on the rear side 2b of the main frame 2 and configured to be connected to a three-point hitch. In an embodiment, the coupling system 20 comprises a group of first main anchorages 21 for to connected to a three-point hitch and a group of second anchorages 22 for the connected to a three-point hitch, which are offset relative to the first main anchorages 21 in a direction perpendicular to the travel direction D. In detail, the first main anchorages 21 comprise a first upper anchorage 21a and two first lower anchorages 21b, and the second main anchorages 22 comprise a second upper anchorage 22a and two second lower anchorages 22b.

The bridge 12 comprises further tubular components, which extend parallel to the travel direction D and connect the front structure 10 and the rear structure 11 to one another. A rear actuator 51 is coupled between the bridge 12 and the second raking unit 5 and can be operated to move the second raking unit 5 between the working configuration and the transport position.

The bridge 12 carries a hydraulic motor 52 for operating the first raking unit 4 and the second raking unit 5.

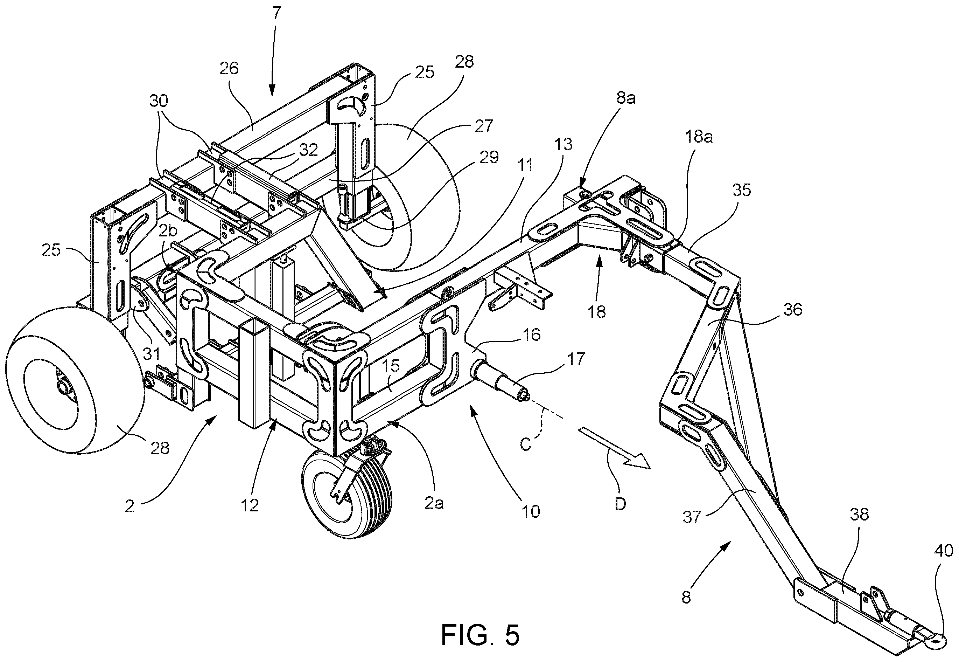

The auxiliary frame 7 may be connected to the coupling system 20 in a removable manner. In an embodiment, the auxiliary frame 7 comprises a pair of uprights 25, an upper crossbeam 26 and a lower crossbeam 27, defined by respective tubular components and forming a quadrilateral (figures 5 and 6). The auxiliary frame 7 is also provided with road supporting wheels 28, coupled to the auxiliary frame 2 by connecting rods 29, each inserted in a sliding and adjustable manner into a respective one of the uprights 25 (figure 6). Anchorages for the removable connection to the coupling system 20 are fixed to the rear structure 11 on the rear side 2b of the main frame 2. In an embodiment, the auxiliary frame 7 comprises upper anchorages 30 and lower anchorages 31, which may be connected to the coupling system 20 by tie rods 32. The upper anchorages 30 are attached to the upper crossbeam 26 and may be connected in a releasable manner to respective first main anchorages 21 and/or second main anchorages 22. The lower anchorages 31 are attached to the lower crossbeam 27 and may be connected in a releasable manner to respective first anchorages 21 and/or second anchorages 22. For example, the auxiliary frame 2 can be connected, by tie rods 23, to the first upper anchorage 21a, to the second upper anchorage 22a, to one of the first lower anchorages 21b and to one of the second lower anchorages 22b.

The lower crossbeam 27 is provided with slots 33 for the insertion of forks of a forklift or a similar machine, so that the auxiliary frame 7 can be easily moved and aligned with the main frame 2 for connection.

The tow bar 8 has a first segment 35 that may be inserted into the seat 18a of the towing connector 18 and, in use, is parallel to the travel direction D, a second segment 36 that is consecutive and oblique with respect to the first segment 35, a third segment 37 that is consecutive to the second segment 36 and is inclined downwards, and a fourth segment 38 that is consecutive to the third segment 37 and is provided with a towing eyelet 40 or with another member for rear connection to an agricultural vehicle, such as a two-point coupling bar (not shown).

The rake 1 described herein has a modular structure and is easily adaptable to be used both as a front rake, carried by the front three-point hitch of an agricultural vehicle, and as a towed rake. Indeed, the auxiliary frame 7 and the tow bar 8 can be connected to the main frame 2 and be removed to change the configuration of the rake 1 according to the needs. The main frame 2, to which the raking units 4, 5 are hinged, is in fact equipped with the coupling system 20 for a three-point hitch on the rear side and is therefore complete in itself to be coupled to the front three-point hitch of an agricultural vehicle. The connection of the auxiliary frame 7 takes advantage of the same coupling system 20 and can be carried out in a simple and quick manner.

Similarly, the tow bar 8 can easily be inserted and locked in the seat 18a of the towing connector 18 and released with the same ease.

The change of configuration of the rake 1, also thanks to the simplicity of the couplings, is quick and does not involve difficulties. The rake 1 according to the invention is therefore particularly suitable to be used in different configurations, as shown in figures 2-4, both as a front rake and as a towed rake.

The supporting wheels 28 of the auxiliary frame 7 can advantageously be road wheels and allow the rake 1 to be towed by the agricultural vehicle even on rough terrain.

Finally, it is clear that the rake disclosed and shown herein can be subjected to changes and variations, without for this reason going beyond the scope of protection of the invention defined in the appended claims.

## Claims

1. Side delivery rake comprising:
a main frame (2) with a front side (2a) and a rear side (2b);
a first raking unit (4) and a second raking unit (5), of the comb type, carried by the main frame (2) and angularly movable between respective working positions, in which the first raking unit (4) and the second raking unit (5) are lowered, and respective transport positions, in which the first raking unit (4) and the second raking unit (5) are raised;
a coupling system (20) arranged on the rear side (2b) of the main frame (2) and configured for connection to a three-point hitch;
**characterized by**:
a towing connector (18) on the front side (2a) of the main frame (2);
an auxiliary frame (7), removably connectable to the coupling system (20) and equipped with supporting wheels (28); and
a tow bar (8), removably connectable to the towing connector (18).

2. The rake according to claim 1, wherein the main frame (2) comprises a front structure (10) and a rear structure (11) transverse to a travel direction (D), and a bridge (12) connecting the front structure (10) and the rear structure (11).

3. The rake according to claim 2, wherein the first raking unit (4) and the second raking unit (5) are hinged to the front structure (10) on a common pin (17) protruding from opposite sides of the front structure (10) along the travel direction (D).

4. The rake according to claim 2 or 3, comprising:
a front actuator (50) coupled between the towing connector (18) and the first raking unit (4) and configured to move the first raking unit (4) between the working position and the transport position; and
a rear actuator (51) coupled between the bridge (12) and the second raking unit (5) and configured to move the second raking unit (5) between the working position and the transport position.

5. The rake according to any one of claims 2 to 4, wherein the coupling system (20) comprises first main anchorages (21) for three-point hitch and second main anchorages (22) for three-point hitch on the rear structure (11), and wherein the auxiliary frame (7) is connected to the first main anchorages (21) and/or the second main anchorages (22).

6. The rake according to claim 5, wherein the first main anchorages (21) comprise a first upper anchorage (21a) and two first lower anchorages (21b) and the second main anchorages (22) comprise a second upper anchorage (22a) and two second lower anchorages (22b);
and wherein the auxiliary frame (7) is connected to the first upper anchorage (21a), to the second upper anchorage (22a), to one of the first lower anchorages (21b) and to one of the second lower anchorages (22b).

7. The rake according to claim 5 or 6, wherein the auxiliary frame (7) comprises:
a pair of uprights (25), an upper crossbeam (26) and a lower crossbeam (27), forming a quadrilateral;
upper auxiliary anchorages (30), attached to the upper crossbeam (26) and releasably connectable to respective first main anchorages (21) and/or second main anchorages (22);
lower auxiliary anchorages (31), attached to the lower crossbeam (27) and releasably connectable to respective first main anchorages (21) and/or second main anchorages (22).

8. The rake according to claim 7, wherein the uprights (25) are defined by respective tubular components and the supporting wheels (28) are connected to the auxiliary frame (7) by connecting rods (29) each slidingly and adjustably inserted into a respective one of the uprights (25).

9. The rake according to any one of claims 2 to 8, wherein the towing connector (18) is attached to the front structure (10) of the main frame (2) in a position transversely offset to the travel direction (D) with respect to a hinge axis (C) of the first raking unit (4).

10. The rake according to any one of claims 2 to 9, comprising:
a front actuator (50) coupled between the towing connector (18) and the first raking unit (4) and configured to move the first raking unit (4) between the working position and the transport position; and
a rear actuator (51) coupled between the bridge (12) and the second raking unit (5) and configured to move the second raking unit (5) between the working position and the transport position.

11. The rake according to any one of the preceding claims, wherein the towing connector (18) comprises a tubular seat (18a) and at least one locking device (19) and wherein one end (8a) of the tow bar (8) is slidably inserted into the tubular seat (18a) and locked therein by the locking device (19).

12. The rake according to claim 11, comprising an auxiliary wheel (55) selectively connectable to the main frame (2) alternatively to the tow bar (8).

13. The rake according to claim 12, wherein the auxiliary wheel (55) is provided with a support (56) having an end that insertable into the tubular seat (18a) of the towing connector (18) as an alternative to the tow bar (8).

14. The rake according to any one of the preceding claims, wherein the drawbar (8) has a first segment (35) insertable in the towing connector (18) and, in use, parallel to the travel direction (D), a second segment (36) consecutive to the first segment (35) and inclined with respect thereto, a third segment (37) consecutive to the second segment (36) and inclined downwards, and a fourth segment (38) consecutive to the third segment (37) and fitted with a connecting member (40) for rear connection to an agricultural vehicle.
